# FASCICULE DE BREVET EUROPEEN

(11) **EP 2 457 857 B1**
(45) Date de publication et mention de la délivrance du brevet: **24.07.2013**
(21) Numéro de dépôt: 11306535.3
(22) Date de dépôt: 22.11.2011
(51) Int. Cl.: B65H 29/24, B65H 35/00, B65H 20/12, B41F 13/02, B65H 29/68, B65H 29/56, B65G 15/60, B65G 21/20

(54) **Dispositif de transfert d'une feuille, et utilisation correspondante**
Transfervorrichtung für ein Blatt, und entsprechende Anwendung
Device for transferring a sheet and corresponding use

(30) Priorité: 24.11.2010 FR 1059671
(43) Date de publication de la demande: 30.05.2012
(73) Titulaire: Goss International Montataire SA, 60160 Montataire (FR)
(72) Inventeur: Blanchard, Alain, 60270 GOUVIEUX (FR); Robert, Jean-François, 60100 CREIL (FR)
(74) Mandataire: Domenego, Bertrand

(56) Documents cités:
- DE-A1- 4 017 147
- DE-A1- 19 929 320
- US-B1- 6 494 452

## Description

La présente invention concerne un dispositif de transfert d'une feuille de substrat, du type comportant :
- un premier cylindre de transfert définissant un premier axe, une direction circonférentielle et une direction transversale ;
- un tapis de transfert s'étendant autour du premier cylindre de transfert.

On connaît dans l'état de la technique des dispositifs de transport de produits imprimés tels que des feuilles de papier. Ces dispositifs de transport sont par exemple utilisés dans des machines d'impression offset afin de transporter les feuilles imprimées.

Ces dispositifs de transport comprennent des rouleaux de transport creux ayant une surface de transport en contact avec la feuille à transporter.

Afin de faire adhérer la feuille sur le rouleau de transport, celui-ci comporte des évidements reliés à un dispositif de création d'un vide.

Le document US 6 494 452 B1 divulgue un dispositif de transfert d'une feuille de substrat selon le préambule de la revendication 1.

La présente invention a pour but d'améliorer la qualité du transfert de la feuille, et ceci avec des moyens simples.

A cet effet, l'invention a pour objet un dispositif de transfert, du type indiqué ci-dessus, caractérisé en ce le premier cylindre de transfert comporte des premières ouvertures de passage d'un gaz et le tapis de transfert comprend des deuxièmes ouvertures de passage d'un gaz, et le tapis de transfert et le premier cylindre de transfert définissent une position d'alignement qui est une position relative du tapis de transfert par rapport au premier cylindre de transfert dans laquelle les deuxièmes ouvertures de passage sont alignées avec les premières ouvertures de passage, et que le dispositif de transfert comporte des moyens de réglage de la position du tapis de transfert par rapport au premier cylindre de transfert adaptés pour amener le tapis de transfert vers la position d'alignement.

Selon des modes de réalisation particuliers, le dispositif de transport comporte l'une ou plusieurs des caractéristiques suivantes :
- le dispositif de transfert comporte un deuxième cylindre de transfert, définissant un deuxième axe, et le tapis de transfert s'étend autour de ce deuxième cylindre de transfert ;
- la position d'alignement comprend une position d'alignement circonférentiel, et les moyens de réglage comportent des moyens de réglage circonférentiel adaptés pour amener le tapis de transfert vers la position d'alignement circonférentiel ;
- les moyens de réglage circonférentiel comprennent des moyens de détermination circonférentielle adaptés pour déterminer la position réelle circonférentielle du tapis de transfert par rapport à la position réelle circonférentielle du premier cylindre de transfert et pour générer à partir de ces positions circonférentielles un signal indiquant un décalage circonférentielle du tapis de transfert et du premier cylindre de transfert par rapport à la position d'alignement circonférentiel ;

- les moyens de détermination circonférentielle comprennent un capteur tapis, notamment une caméra adaptée pour capter une image du tapis de transfert, et un capteur premier cylindre de transfert, notamment un encodeur relié au premier cylindre de transfert ;
- les moyens de réglage circonférentiel comprennent soit des moyens de décalage en translation du deuxième cylindre de transfert par rapport au premier cylindre de transfert, soit des moyens de réglage de la vitesse relative circonférentielle entre le premier cylindre de transfert et le deuxième cylindre de transfert ;
- la position d'alignement comprend une position d'alignement latéral, et en ce que les moyens de réglage comprennent des moyens de réglage latéral adaptés pour amener le tapis de transfert vers la position d'alignement latéral ;
- les moyens de réglage latéral comprennent des moyens de détermination latérale adaptés pour déterminer la position réelle latérale du tapis de transfert par rapport au premier cylindre de transfert et pour générer à partir de cette position latérale déterminée un signal indiquant un décalage latéral du tapis de transfert et du premier cylindre de transfert par rapport à la position d'alignement latéral ;
- les moyens de réglage latéral comprennent des moyens de décalage angulaire du deuxième cylindre de transfert par rapport au premier cylindre de transfert ;
- le dispositif de transfert comprend des moyens de centrage latéral du tapis de transfert par rapport au premier cylindre de transfert, notamment ces moyens de centrage comprenant une surface bombée du ou de chaque cylindre de transfert ou des brides latérales du ou de chaque cylindre de transfert ;
- le tapis de transfert comporte au moins une zone longitudinale de feuille qui est constituée d'une portion amont, d'une portion médiane et d'une portion aval ; et
- au moins la portion amont et/ou la portion aval est/sont munies des deuxièmes ouvertures de passage de gaz définissant une perméabilité surfacique de gaz de la portion amont/aval
et la perméabilité surfacique de gaz de la portion amont et/ou de la portion aval est/sont supérieure(s) à la perméabilité surfacique de gaz de la portion médiane.

L'invention a également pour objet l'utilisation d'un dispositif de transfert d'une feuille de substrat tel que défini ci-dessus, comprenant les étapes successives suivantes :
- entraîner le premier cylindre de transfert à une vitesse de cylindre,
- déterminer la position réelle des premières ouvertures de passage,
- déterminer la position réelle des deuxièmes ouvertures de passage,
- modifier la position relative du tapis de transfert par rapport au premier cylindre de transfert en alignant les deuxièmes ouvertures de passage d'un gaz avec les premières ouvertures de passage d'un gaz.

Selon un mode de réalisation particulier, l'utilisation comporte la caractéristique suivante : la modification est une modification latérale et/ou circonférentielle.

L'invention sera mieux comprise à la lecture de la description qui va suivre, donnée uniquement à titre d'exemple et faite en se référant aux dessins annexés, sur lesquels :
- la figure 1 est une vue schématique de côté d'une machine d'impression selon l'invention ;
- la figure 2 est une vue schématique de côté du dispositif de découpe et d'empilage selon un premier mode de réalisation de l'invention ;
- la figure 3 est une vue agrandie d'un détail de la figure 2, montrant un dispositif de transfert du dispositif de découpe et d'empilage ;
- la figure 4 est une vue de dessus du dispositif de transfert de la figure 3;
- la figure 5 est une vue schématique correspondant à la vue de la figure 4, d'un deuxième mode de réalisation du dispositif de transfert selon l'invention ;
- les figures 6 et 7 sont des vues schématiques de troisième et quatrième modes de réalisation d'un dispositif de transfert, ces vues correspondant aux vues de la figure 4.

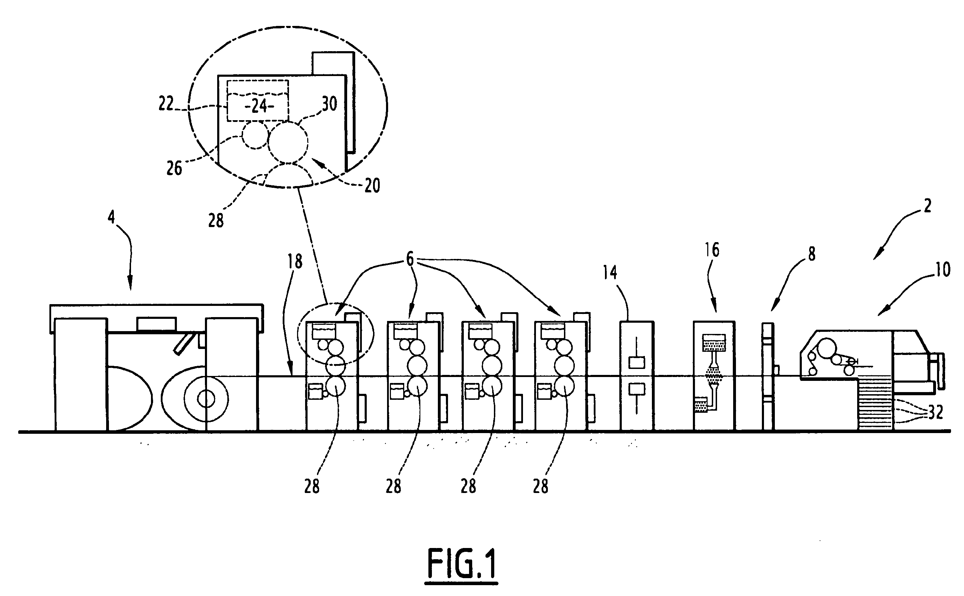

Sur la figure 1 est représentée une machine d'impression rotative selon l'invention, désignée par la référence générale 2.

La machine d'impression 2 comprend un dérouleur 4, quatre unités d'impression 6, un dispositif de traction 8 et un dispositif de découpe et d'empilage 10. Le dispositif de découpe et d'empilage 10 est dans le cas présent un dispositif de découpe, de transfert et d'empilage 10. La machine d'impression 2 comprend en outre un dispositif de saisie de bande 14 et un dispositif de poudrage 16.

La machine d'impression 2 pourrait comprendre un nombre quelconque d'unités d'impression 6, en théorie, de un à n.

Le dérouleur 4 est adapté pour dérouler une bande à imprimer continue 18.

La bande à imprimer 18 est une bande de papier couché. Le papier couché est un papier qui comprend une couche de revêtement, par exemple en kaolin ou en craie, améliorant les propriétés mécaniques ou optiques du papier. En variante, il est possible que la bande à imprimer soit une bande de papier non couché.

La machine d'impression 2 définit un trajet d'impression de la bande 18 entre le dérouleur 4, à travers les unités d'impression 6, le dispositif de saisie de bande 14, le dispositif de poudrage 16, et le dispositif de traction 8, jusqu'au dispositif de découpe et d'empilage 10.

Chaque unité d'impression 6 comporte un dispositif encreur 20 qui est muni d'un réservoir d'encre 22 comprenant de l'encre 24 prévue pour l'impression sur une bande de papier 18. Chaque dispositif encreur 20 comprend un rouleau de transfert d'encre 26 pour le transfert de l'encre 24 à des rouleaux d'impression 28 (voir ci-après), par l'intermédiaire d'un cylindre plaque 30. La machine d'impression 2 est donc une presse d'impression offset.

Les unités d'impression 6 comprennent ces rouleaux d'impression 28 qui sont adaptés pour imprimer sur la bande de papier 18.

Le dispositif de découpe et d'empilage 10 est adapté pour découper la bande à imprimer 18 en des feuilles individuelles 32 et pour produire une pile des feuilles individuelles découpées.

Le dispositif de traction 8 est situé en aval de l'unité d'impression 6 la plus en aval et en amont du dispositif de découpe et d'empilage 10. Ce dispositif de traction 8 est adapté pour appliquer une tension mécanique déterminée sur la bande 18 sortant de l'unité d'impression 6 la plus en aval.

Le dispositif de saisie de bande 14 est adapté pour détecter une rupture de la bande de papier 18 et pour saisir l'extrémité libre de la bande de papier 18 dans ce cas.

Le dispositif de poudrage 16 est adapté pour déposer de la poudre anti-maculante sur chacune des faces de la bande 18 imprimée. Il peut déposer de la poudre anti-maculante sur l'une ou sur les deux faces de la bande 18 imprimée. La poudre utilisée pour le poudrage de la bande est une poudre végétale à base de maïs ou une poudre minérale.

Le dispositif de traction 8, associé aux autres unités de la presse, permet d'imprimer une bande de papier et de la réceptionner dans le dispositif de découpe et d'empilage 10, sans sécher cette bande de papier 12 et par évaporation des solvants de l'encre.

L'image est imprimée par l'encre 24 contenue dans le réservoir d'encre 22. De manière avantageuse, l'encre 24 est une encre sécative, ou une encre sans eau (« waterless »), ou une encre bi-composante. Le séchage des encres sécatives est la combinaison d'un premier phénomène dit « la pénétration dans le support » et d'un second phénomène dit « l'oxydo-polymérisation des vernis constitués d'huiles et de résines ».

Les encres sans eau (« waterless ») sont utilisées avec des plaques d'impression spécifiques permettant de définir des zones non imprimantes sans faire appel au procédé lithographique classique fondé sur le refus de l'encre grasse par une surface hydrophile préalablement humidifiée. L'utilisation de ces encres peut être envisagée au même titre que les encres sécatives conventionnelles vues précédemment et permet de se dispenser d'un sécheur, ou de le concevoir de manière moins encombrante.

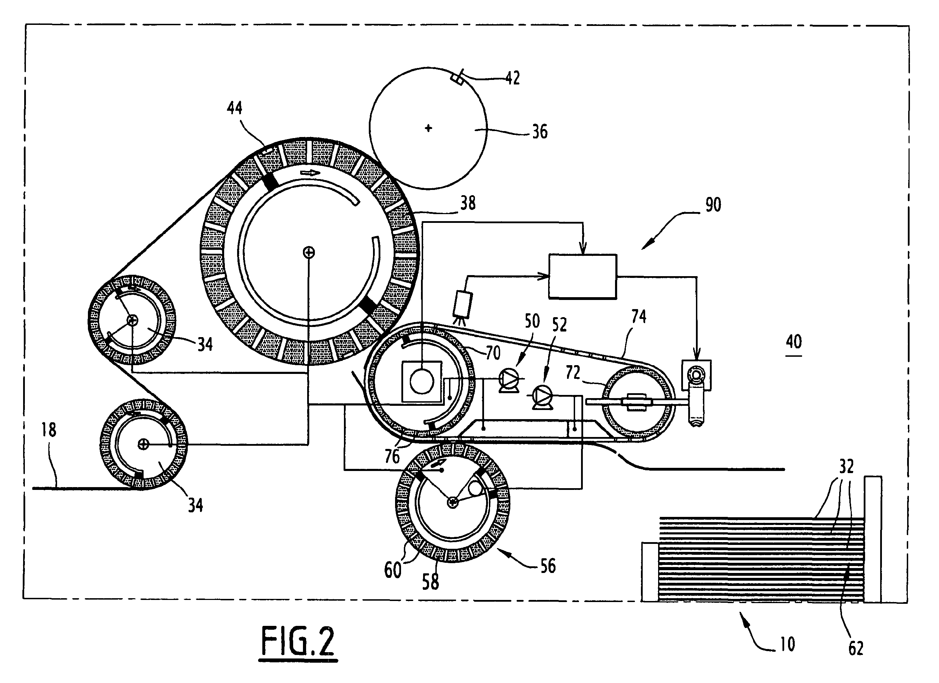

Sur la figure 2 est représenté schématiquement le dispositif de découpe et d'empilage 10.

Le dispositif de découpe et d'empilage 10 comporte deux rouleaux d'entrée 34, un cylindre de coupe 36 et un cylindre de contre-pression 38.

Le dispositif de découpe et d'empilage 10 comporte une structure fixe 40 ou bâti.

Les rouleaux d'entrée 34 sont disposés en amont du cylindre de coupe 36 et du cylindre de contre-pression 38. Les deux rouleaux d'entrée 34 sont mobiles en rotation. Chacun des rouleaux d'entrée 34 comporte une enveloppe ayant des trous traversants.

Le cylindre de coupe 36 comporte une lame 42 et est mobile en rotation.

Le cylindre de contre-pression 38 est mobile en rotation et comporte des blocs de contre-pression 44 coopérant avec la lame 42, afin de couper la bande de papier 18 en feuilles 32.

Le dispositif de découpe 10 comporte également un dispositif de dépression 50 ou de vide adapté pour créer une dépression ou un vide et un dispositif de pression 52.

Le dispositif de découpe et d'empilage 10 comporte un dispositif de transfert 54 et un dispositif de pose 56.

Le dispositif de transfert 54 est adapté pour saisir une feuille 32 du cylindre de contre pression 38 et de la transférer vers le dispositif de pose 56.

Le dispositif de pose 56 comporte un cylindre de pose 58 mobile en rotation autour d'un axe. Le cylindre de pose 58 comporte des ouvertures 60.

Le dispositif de découpe 10 délimite un trajet de la bande de papier 18 et des feuilles 32 s'étendant de l'entrée de ce dispositif 10 successivement sur les rouleaux d'entrée 34, le cylindre de contre-pression 38, le dispositif de transfert 54, le cylindre de pose 58 jusqu'à une pile 62 de feuilles individuelles 32.

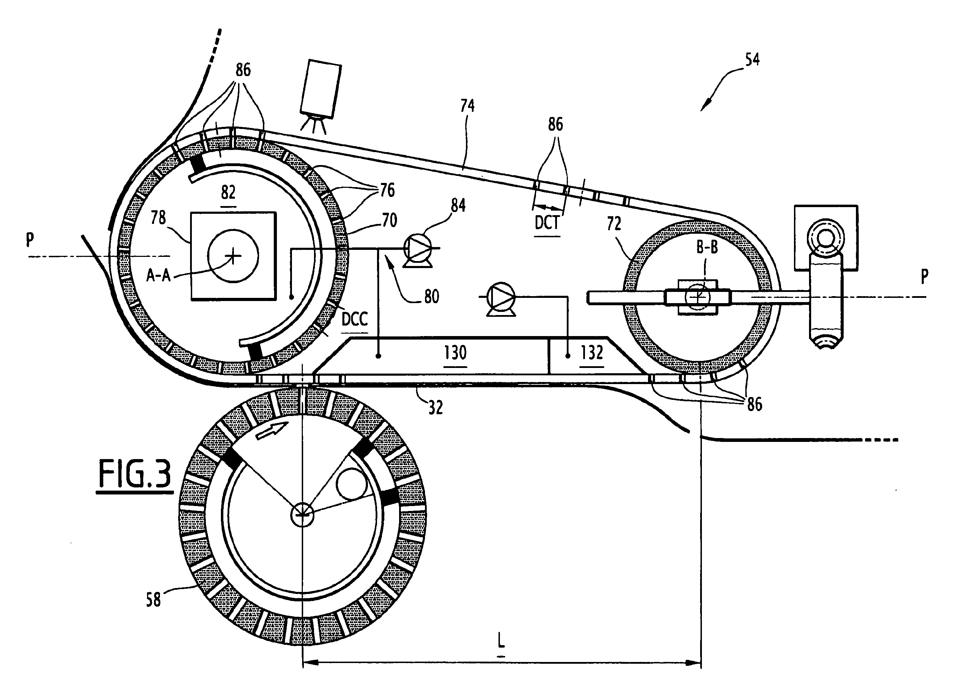

Par la suite sera décrit plus en détail le dispositif de transfert 54, notamment en référence à la Figure 3. Le dispositif de transfert 54 comprend un premier cylindre de transfert 70, un deuxième cylindre de transfert 72 et un tapis de transfert 74. Le tapis de transfert 74 s'étend autour du premier cylindre de transfert 70 et autour du deuxième cylindre de transfert 72.

Le premier cylindre de transfert 70 comporte des premières ouvertures de passage d'un gaz 76. Les premières ouvertures de passage d'un gaz 76 sont disposées sur la surface extérieure du premier cylindre de transfert 70 à une distance circonférentielle DCC les unes des autres. Les ouvertures de passage d'un gaz 76 sont disposées à des intervalles réguliers DCC sur toute la circonférence du premier cylindre de transfert 70.

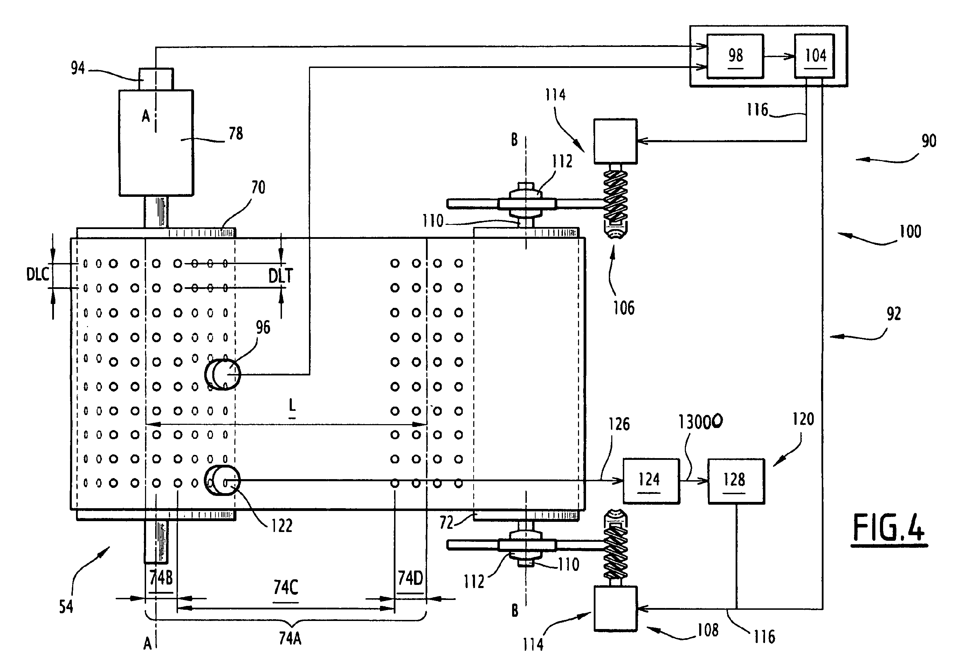

Les premières ouvertures de passage d'un gaz 76 sont disposées sur la surface extérieure du premier cylindre de transfert 70 à une distance latérale DLC les unes des autres (Figure 4).

Le premier cylindre de transfert 70 définit une direction circonférentielle s'étendant autour de l'axe A-A et une direction transversale s'étendant le long de l'axe A-A. Le premier cylindre de transfert 70 est mobile en rotation autour d'un axe de rotation A-A. Le premier cylindre de transfert 70 est entraîné en rotation par un moteur d'entraînement 78.

Le dispositif de transfert 54 comprend également des moyens de création d'un vide 80 ou d'une dépression dans une partie des premières ouvertures de passage d'un gaz 76. En l'occurrence, ces moyens de création d'un vide 80 comprennent le dispositif de dépression 50.

Ces moyens de création d'un vide 80 comprennent une chambre à vide 82 s'étendant à l'intérieur du cylindre de transfert 70 d'une zone de prise située en face du cylindre 38 à une zone de détachement. La zone de prise est l'emplacement auquel la feuille 32 est enlevée du cylindre 38 et prise par le tapis de transfert 74. Dans la zone de détachement le tapis de transfert 74 se détache du premier rouleau de transfert 70. Cette zone de détachement est située adjacente à une boite à vide 130 (voir ci après). En d'autres termes, le premier cylindre de transfert 70 et les moyens de création d'un vide 80 sont adaptés pour créer une dépression dans les ouvertures de passage d'un gaz 76 disposée sur une zone de dépression s'étendant sur un secteur angulaire autour de l'axe A-A. Le secteur angulaire a une étendue inférieure à 180°.

Les moyens de création d'un vide 80 comprennent une pompe à vide 84 reliée à la chambre à vide 82.

Le tapis de transfert 74 est un tapis sans fin. Le tapis de transfert 74 a une longueur circonférentielle qui est un multiple entier de la longueur L d'une feuille 32 à transférer. En l'occurrence, la longueur circonférentielle du tapis est de 4L.

Le cylindre de transfert 72 joue le rôle de rouleau tendeur du tapis 74.

Le tapis de transfert 74 s'étend autour des cylindres de transfert 70, 72.

Le tapis de transfert 74 comprend une pluralité d'ouvertures de passage d'un gaz 86, nommées encore deuxièmes ouvertures de passage 86. La distance circonférentielle DCT entre les ouvertures de passage d'un gaz 86 est identique à la distance DCC.

La longueur circonférentielle du tapis 74 est un multiple entier de la distance DCC. La distance latérale DLT entre les ouvertures de passage d'un gaz 86 est identique à la distance DLC.

Ainsi, le tapis de transfert 74 et le premier cylindre de transfert 70 définissent une position d'alignement qui est une position relative du tapis de transfert par rapport au premier cylindre de transfert 70, dans laquelle les ouvertures de passage d'un gaz 86 sont alignées avec les ouvertures de passage d'un gaz 76. Dans cette position d'alignement, la dépression qui est crée par les moyens de création d'un vide 80 aspire une feuille 32 contre la surface du tapis de transfert 74 et assure le maintien de la feuille 32 contre le tapis de transfert, au moins sur la zone de dépression.

La position d'alignement se divise en une position d'alignement circonférentiel et une position d'alignement latéral.

Le dispositif de transfert 54 comprend des moyens de réglage 90 adaptés pour régler la position du tapis de transfert 74 par rapport au premier cylindre de transfert 70 et adaptés pour amener le tapis de transfert 74 par rapport au premier cylindre de transfert 70 vers ou dans la position d'alignement, et ceci automatiquement lorsque le tapis de transfert 74 et le premier cylindre de transfert 70 sont décalés de la position d'alignement.

A cet effet, les moyens de réglage 90 comportent des moyens de réglage circonférentiel 92 adaptés pour régler la position du tapis de transfert 74 par rapport au premier cylindre de transfert 70 selon la direction circonférentielle. Les moyens de réglage circonférentiel 92 sont adaptés pour amener le tapis de transfert 74 par rapport au premier cylindre de transfert 70 dans la position d'alignement circonférentiel et ceci automatiquement lorsque le tapis de transfert 74 et le premier cylindre de transfert 70 sont décalés de la position d'alignement circonférentiel.

Les moyens de réglage circonférentiel 92 comprennent des moyens de détermination circonférentielle adaptés pour déterminer la position réelle circonférentielle du tapis de transfert 74 par rapport à la position réelle circonférentielle du premier cylindre de transfert 70.

Ces moyens de détermination circonférentielle comprennent d'une part, un encodeur 94 déterminant la vitesse de rotation ou la position absolue rotative du premier cylindre de transfert 70. Les moyens de détermination circonférentielle comprennent également un capteur optique, notamment une caméra 96 adaptée pour capter une image du tapis de transfert.

Ces moyens de détermination circonférentielle comprennent un module de contrôle 98 adapté pour générer un signal de sortie à partir des signaux de l'encodeur 94 et de la caméra 96 et représentant le décalage circonférentiel entre le tapis de transfert 74 et le premier cylindre de transfert 70 de la position d'alignement circonférentiel. Ce décalage est le décalage angulaire ou la plus petite distance circonférentielle entre les deuxièmes ouvertures 86 et les premières ouvertures 76. Sur les Figures 3 et 4, le décalage circonférentiel est 0, le tapis de transfert 74 et le premier cylindre de transfert 70 étant dans leur position d'alignement circonférentiel.

En variante, l'encodeur 94 peut être remplacé par un autre capteur cylindre adapté pour relever la position circonférentielle du premier cylindre transfert 70. De même, la caméra 96 peut être remplacée par un autre capteur tapis adapté pour relever la position circonférentielle du tapis de transfert.

Les moyens de réglage circonférentiel 92 comprennent également des moyens de décalage circonférentiel du tapis de transfert 74 par rapport au premier cylindre de transfert 70. Ces moyens de décalage circonférentiel comprennent des moyens de décalage en translation 100 du deuxième cylindre de transfert 72, en fonction du signal de sortie du module de contrôle 98.

Le deuxième cylindre de transfert 72 est mobile en rotation autour d'un axe B-B. Les axes A-A et B-B s'étendent dans un plan d'axes P-P.

Les moyens de décalage en translation 100 sont adaptés pour décaler le deuxième cylindre de transfert 72 en translation par rapport au premier cylindre de transfert dans le plan d'axes P-P.

Les moyens de décalage en translation 100 comprennent un module de commande 104, qui est un module de commande circonférentiel, ainsi qu'un premier 106 et un deuxième 108 dispositifs de support. Le module de commande 104 est adapté pour asservir le premier 106 et le deuxième 108 dispositifs de support.

Le deuxième cylindre de transfert 72 comporte à chacune de ces extrémités un embout d'axe 110. Chacun des dispositifs de support 106 et 108 est adapté pour décaler l'embout d'axe 110 associé en translation perpendiculairement à l'axe A-A. A cet effet, chaque dispositif de support 106, 108 comprend un élément sphérique 112 logé en rotation dans l'embout d'arbre 110 associé et un actionneur 114 relié au module de commande 104 par une ligne de commande 116.

Afin de décaler le deuxième cylindre de transfert 72 en translation par rapport au premier cylindre de transfert 70, le module de commande 104 actionne simultanément les actionneurs 114 de telle sorte que les embouts d'axe soient entraînés avec la même vitesse, et selon le même sens.

Le module de commande 104 et les actionneurs 114 sont donc des moyens de réglage de la vitesse relative circonférentielle entre le premier cylindre de transfert et le deuxième cylindre de transfert.

Les moyens de réglage 90 comprennent également des moyens de réglage latéral 120 adaptés pour déplacer le tapis de transfert 74 par rapport au premier cylindre de transfert 70 selon la direction latérale et ceci automatiquement lorsque le tapis de transfert 74 et le premier cylindre de transfert 70 sont décalés de la position d'alignement latéral. Les moyens de réglage latéral 120 comprennent des moyens de détermination latérale adaptés pour déterminer la position réelle latérale du tapis de transfert 74 par rapport au premier cylindre de transfert 70. Ces moyens de détermination latérale sont par exemple munis d'un capteur 122.

Les moyens de détermination latérale comprennent également un module de contrôle 124. Le capteur 122 est relié au module de contrôle 124 par une ligne de signal 126 et est adapté pour transmettre un signal représentant la position latérale réelle du tapis au module de contrôle 124.

Le module de contrôle 124 est adapté pour générer un signal indiquant un décalage latéral du tapis de transfert 74 et du premier cylindre de transfert 70 par rapport à la position d'alignement latéral.

Les moyens de réglage latéral 120 comprennent également des moyens de décalage angulaire du deuxième cylindre de transfert 72 par rapport au premier cylindre de transfert 70. En l'occurrence, les moyens de décalage angulaire comprennent le dispositif de support 108 associé à un seul des embouts 110 ainsi qu'un un module de commande 128, qui est adapté pour générer un signal indiquant le décalage entre une position latérale de consigne du tapis de transfert 74 par rapport au premier cylindre de transfert et la position latérale réelle. A cet effet, le module de commande 128 reçoit le signal généré par le module de contrôle 124 par une ligne 13000.

Afin de décaler angulairement le deuxième cylindre de transfert 72 par rapport au premier cylindre de transfert 70, le module de commande 128 crée et envoie un signal de commande à l'actionneur 114 du dispositif de support 108, de préférence par l'intermédiaire de la ligne de commande 116. Le décalage angulaire est un décalage angulaire autour d'un axe perpendiculaire au plan d'axes P-P défini par les axes A-A et B-B. Dans le cas où le premier cylindre de transfert 70 et le tapis de transfert sont dans la position d'alignement latéral, l'actionneur 114 du dispositif de support 108 est commandé de telle sorte que les axes A-A et B-B soient parallèles.

En outre, en se référant à la figure 3, le dispositif de transfert 54 comporte une boite à vide 130 adaptée pour créer un vide dans les ouvertures 86 à un emplacement disposé entre les cylindres de transferts 70 et 72. La boite à vide 130 est relié au dispositif de dépression 50.

Le dispositif de transfert 54 comprend également une boite de soufflage 132 adaptée pour créer une surpression et un courant de gaz tendant à éloigner la feuille 32 du tapis de transfert 74. La boite de soufflage 132 est disposée adjacent à la boite à vide 130 et au cylindre de transfert 72. La boite de soufflage 132 est adaptée pour souffler la feuille 32 en s'éloignant du tapis de transfert 74 vers le dispositif de pose 56 ou vers la pile 62. Plus exactement, la boîte de soufflage 132 est adaptée pour souffler uniquement la tête de la feuille vers la pile 62.

En variante, la boîte d'aspiration 130 et la boîte de soufflage 132 peuvent être omises.

Le dispositif de pose 56 est adapté pour ralentir la portion aval de la feuille.

Le tapis de transfert 74 comporte une zone longitudinale de feuille 74A. Pendant l'utilisation du dispositif de transfert, une feuille de substrat 32 s'étend sur sensiblement toute la longueur de la zone longitudinale de feuille 74A. La zone longitudinale de feuille 74A est constituée d'une portion amont 74B, d'une portion médiane 74C et d'une portion aval 74D. La portion amont 74B et la portion aval 74D sont munies des ouvertures de passage 86. L'ensemble de ces ouvertures de passage 86 définissent une perméabilité surfacique de gaz pour l'ensemble respectivement de la portion amont 74B et aval 74D. La portion médiane 74C est dépourvue d'ouvertures de passage 86. La perméabilité surfacique de gaz de chacune des portions amont 74B et aval 74D est donc supérieure à la perméabilité surfacique de gaz de la portion médiane 74C.

La portion médiane est plus longue que la portion aval/amont.

La longueur circonférentielle de la portion médiane 74C est d'au moins 50% de la longueur L. La longueur circonférentielle de chaque portion amont 74B est d'au moins 2% de la longueur L. La longueur circonférentielle de chaque portion aval 74C est d'au moins 10% de la longueur L.

La longueur circonférentielle de chacune des portions amont 74B et aval 74C est comprise entre 5mm et 150mm et est de préférence de 10mm pour chaque portion amont et de 80mm pour chaque portion aval.

Ainsi, uniquement les bords amont et les bords aval de chaque feuille 32 sont saisis par le dispositif de transfert 54.

Le dispositif de transfert 54 selon l'invention permet de transférer d'une manière efficace une feuille 32 du cylindre 38, vers le dispositif de pose 56 ou la pile 62 et a une disponibilité importante. De plus, le dispositif de transfert 54 évite un mauvais acheminement d'une feuille.

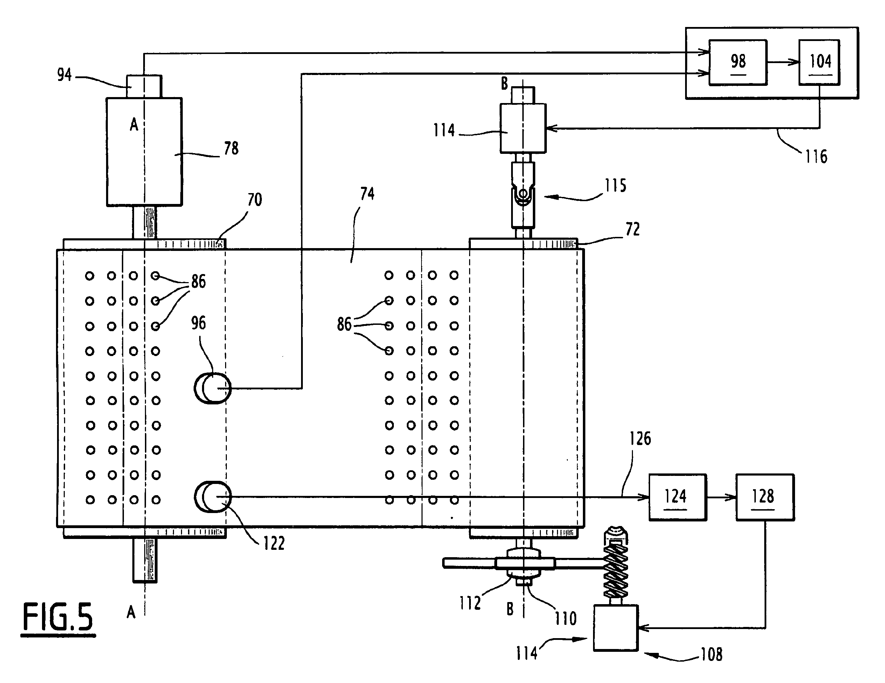

Sur la figure 5 est représenté un deuxième mode de réalisation d'un dispositif de transfert, qui diffère du mode de réalisation précédemment décrit uniquement par ce qui suit. Les éléments analogues portent les mêmes références.

Les moyens de réglage circonférentiel 92 comprennent un moteur d'entraînement 114 du deuxième cylindre de transfert 72. Le moteur d'entraînement 114 est actionné par le module de commande 104 par l'intermédiaire de la ligne de commande 116.

Le dispositif de support 106 a été omis.

Lorsqu'aucun décalage circonférentielle du tapis de transfert 74 par rapport au cylindre de transfert 70 n'est nécessaire, le moteur d'entraînement 114 est entraîné à une vitesse telle que le cylindre de transfert 72 ait une vitesse circonférentielle identique à celle du cylindre de transfert 70. Lorsque le tapis de transfert 74 doit être déplacé en avance par rapport au cylindre de transfert 70 afin d'amener le tapis de transfert 74 vers la position d'alignement, le moteur 114 est entraîné de telle sorte que la vitesse circonférentielle du cylindre 72 est supérieure à la vitesse circonférentielle du cylindre de transfert 70. Lorsque le tapis de transfert 74 doit être décalé vers l'arrière par rapport au cylindre de transfert 70 afin d'amener le tapis de transfert 74 vers la position d'alignement, le moteur 114 est entraîné de telle sorte que la vitesse circonférentielle du cylindre de transfert 72 est inférieure à la vitesse circonférentielle du cylindre de transfert 70.

Ainsi, les moyens de réglage circonférentielle comprennent des moyens de réglage de la vitesse circonférentielle relative entre le premier cylindre de transfert et le deuxième cylindre de transfert. Les vitesses circonférentielles sont respectivement considérées sur la surface des cylindres de transfert 70, 72 sur laquelle s'applique le tapis de transfert 74.

Afin que le réglage latéral soit possible par un décalage angulaire du cylindre 72 analogue au décalage du mode de réalisation, le moteur d'entraînement 114 est relié à l'embout 110 au moyen d'un joint cardan 115.

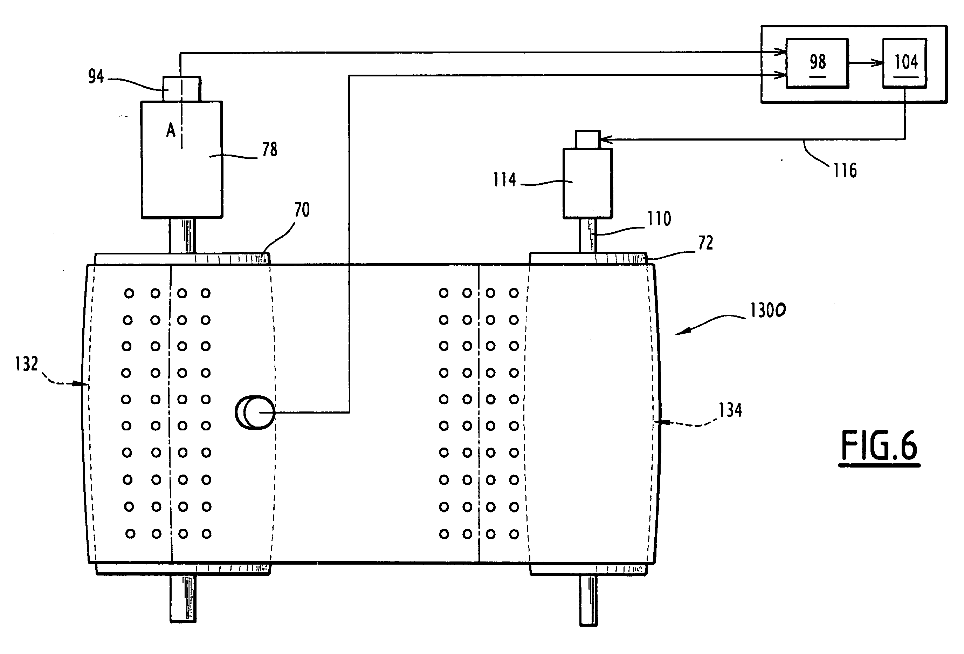

Sur la figure 6 est montré un troisième mode de réalisation du dispositif de transfert selon l'invention. Ce mode de réalisation diffère du deuxième mode de réalisation uniquement par ce qui suit. Les éléments analogues portent les mêmes références.

Le dispositif de transfert 54 ne comprend pas de moyen de réglage latéral ou moyen de décalage angulaire du deuxième cylindre de transfert 72, par rapport au premier cylindre de transfert 70, mais comprend des moyens de centrage latéral 1300 du tapis de transfert 74 par rapport au premier cylindre de transfert 70. Les moyens de centrage latéral 1300 comprennent des surfaces bombées 132, 134 de chacun des cylindres de transfert. Chacune des surfaces bombées est une surface convexe. Le diamètre maximal de chaque cylindre de transfert 70, 72 est situé sur un plan médian du cylindre de transfert. Le tapis de transfert 74 s'applique sur chacune des surfaces bombées 132, 134.

En outre, le moteur d'entraînement 114 est relié fixe en rotation à l'embout 110 et n'a pas de degré de liberté en rotation selon un axe perpendiculaire au plan P-P par rapport à l'embout. En d'autres termes, le joint cardan 115 est omis.

Aussi, l'actionneur 108 a été supprimé.

Le dispositif de transfert selon ce troisième mode de réalisation est particulièrement simple à fabriquer et est donc économique.

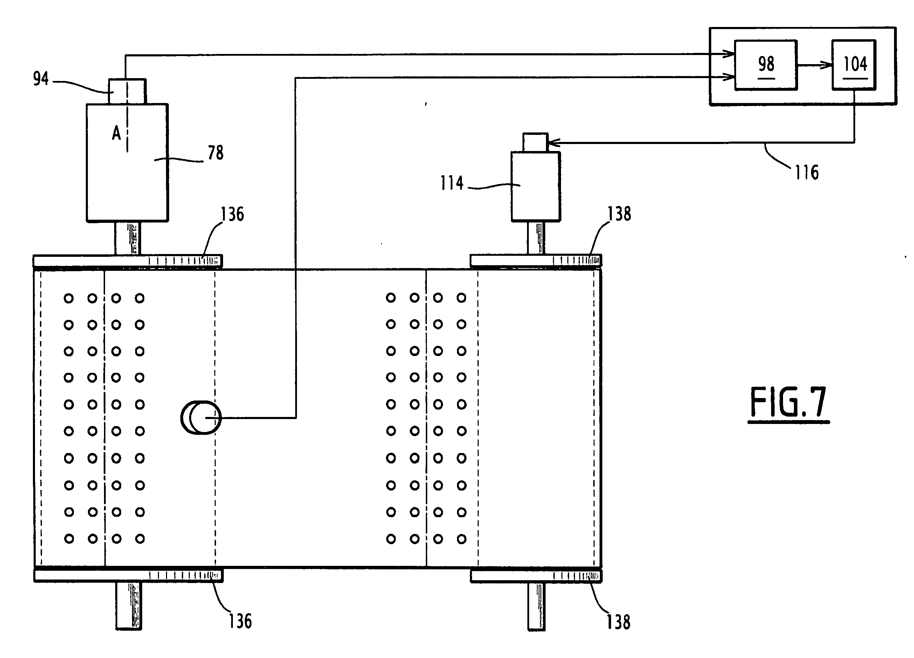

Sur la figure 7 est représenté un quatrième mode de réalisation, qui diffère du troisième mode de réalisation par ce qui suit. Les éléments analogues portent les mêmes références.

Les moyens de centrage latéral du tapis de transfert ne sont pas constitués par des surfaces bombées, mais par des brides latérales 136, 138 des cylindres de transfert 70,72.

D'une manière générale, lorsque le tapis de transfert 74 est en avance (décalage positif) par rapport au cylindre de transfert 70, c'est-à-dire, lorsque les deuxièmes ouvertures 86 doivent être déplacées en arrière par rapport aux premières ouvertures 76, les moyens de réglage circonférentiel 92 sont commandés afin d'obtenir une augmentation de l'élongation de la courroie de transfert. Par contre, lorsque le tapis de transfert 74 est en retard (décalage négatif) par rapport au cylindre de transfert 70, c'est-à-dire, lorsque les deuxièmes ouvertures 86 doivent être déplacées en avant par rapport aux premières ouvertures 76, les moyens de réglage circonférentiel 92 sont commandés afin d'obtenir une diminution de l'élongation de la courroie de transfert.

Selon d'autres caractéristiques:
Le premier cylindre de transfert délimite une zone de transfert adaptée pour transférer une feuille et s'étendant angulairement autour de l'axe A-A entre une zone de prise et une zone de détachement.

Dans la position d'alignement, les première 76 et deuxième 86 ouvertures de passage d'un gaz sont au moins alignées dans la zone de transfert ;

Dans la position d'alignement, un gaz, notamment de l'air peut passer à travers les premier et deuxième ouvertures alignées.

Une autre caractéristique est un dispositif de découpe d'une bande de papier comprenant un cylindre de coupe 36 et un cylindre de contre-pression 38 adaptés pour couper une bande de substrat en feuilles, et un dispositif de transfert 54 adapté pour transférer les feuilles, le dispositif de transfert étant un dispositif tel que défini précédemment.

## Revendications

1. Dispositif de transfert (54) d'une feuille de substrat (32), du type comportant :
- un premier cylindre de transfert (70) définissant un premier axe (A-A), une direction circonférentielle et une direction transversale,
- un tapis de transfert (74) s'étendant autour du premier cylindre de transfert (70),
où le premier cylindre de transfert (70) comporte des premières ouvertures de passage d'un gaz (76) et le tapis de transfert (74) comprend des deuxièmes ouvertures de passage d'un gaz (86), où le tapis de transfert (74) et le premier cylindre de transfert (70) définissent une position d'alignement qui est une position relative du tapis de transfert (74) par rapport au premier cylindre de transfert (70) dans laquelle les deuxièmes ouvertures de passage (86) sont alignées avec les premières ouvertures de passage (76), **caractérisé en ce que** le dispositif de ansfert (54) comporte des moyens de réglage (90) de la position du tapis de transfert (74) par rapport au premier cylindre de transfert (70) adaptés pour amener le tapis de transfert (74) vers la position d'alignement.

2. Dispositif de transfert (54) selon la revendication 1, **caractérisé en ce que** le dispositif de transfert (54) comporte un deuxième cylindre de transfert (72), définissant un deuxième axe (B-B), et **en ce que** le tapis de transfert (74) s'étend autour de ce deuxième cylindre de transfert (72).

3. Dispositif de transfert (54) selon la revendication 1 ou 2, **caractérisé en ce que** la position d'alignement comprend une position d'alignement circonférentiel, et **en ce que** les moyens de réglage (90) comportent des moyens de réglage circonférentiel (92) adaptés pour amener le tapis de transfert (74) vers la position d'alignement circonférentiel.

4. Dispositif de transfert (54) selon la revendication 3, **caractérisé en ce que** les moyens de réglage circonférentiel (92) comprennent des moyens de détermination circonférentielle (94, 96, 98) adaptés pour déterminer la position réelle circonférentielle du tapis de transfert (74) par rapport à la position réelle circonférentielle du premier cylindre de transfert (70) et pour générer à partir de ces positions circonférentielles un signal indiquant un décalage circonférentielle du tapis de transfert (74) et du premier cylindre de transfert (70) par rapport à la position d'alignement circonférentiel.

5. Dispositif de transfert (54) selon la revendication 4, **caractérisé en ce que** les moyens de détermination circonférentielle (94,96,98) comprennent un capteur tapis (96), notamment une caméra adaptée pour capter une image du tapis de transfert (74), et un capteur premier cylindre de transfert (94), notamment un encodeur relié au premier cylindre de transfert.

6. Dispositif de transfert (54) selon la revendication 2 prise ensemble avec l'une quelconque des revendications 3 à 5, **caractérisé en ce que** les moyens de réglage circonférentiel comprennent soit des moyens de décalage en translation (100) du deuxième cylindre de transfert (72) par rapport au premier cylindre de transfert (70), soit des moyens de réglage (104, 114) de la vitesse relative circonférentielle entre le premier cylindre de transfert et le deuxième cylindre de transfert.

7. Dispositif de transfert (54) selon l'une quelconque des revendications précédentes, **caractérisé en ce que** la position d'alignement comprend une position d'alignement latéral, et **en ce que** les moyens de réglage comprennent des moyens de réglage latéral (120) adaptés pour amener le tapis de transfert vers la position d'alignement latéral.

8. Dispositif de transfert (54) selon la revendication 7, **caractérisé en ce que** les moyens de réglage latéral (120) comprennent des moyens de détermination latérale (122) adaptés pour déterminer la position réelle latérale du tapis de transfert (74) par rapport au premier cylindre de transfert (70) et pour générer à partir de cette position latérale déterminée un signal indiquant un décalage latéral du tapis de transfert (74) et du premier cylindre de transfert (70) par rapport à la position d'alignement latéral.

9. Dispositif de transfert (54) selon au moins les revendications 2 et 8 prises ensemble, **caractérisé en ce que** les moyens de réglage latéral comprennent des moyens de décalage angulaire du deuxième cylindre de transfert (72) par rapport au premier cylindre de transfert (70).

10. Dispositif de transfert (54) selon l'une quelconque des revendications précédentes, **caractérisé en ce qu'**il comprend des moyens de centrage latéral du tapis de transfert (74) par rapport au premier cylindre de transfert (70), notamment ces moyens de centrage comprenant une surface bombée (132, 134) du ou de chaque cylindre de transfert (70,72) ou des brides latérales (136, 138) du ou de chaque cylindre de transfert (70,72).

11. Dispositif de transfert (54) selon l'une quelconque des revendications précédentes, **caractérisé en ce que** le tapis de transfert (74) comporte au moins deux zones longitudinales de feuille (74A), préférence trois zones longitudinales de feuille (74A), ont chacune est constituée d'une portion amont (74B), d'une portion médiane (74C) et d'une portion aval (74D),
**en ce qu'**au moins la portion amont (74B) et/ou la portion aval (740) est/sont munies des deuxièmes ouvertures de passage de gaz (86) définissant une perméabilité surfacique de gaz de la portion amont/aval
et **en ce que** la perméabilité surfacique de gaz de la portion amont (74B) et/ou de la portion aval (74D) est/sont supérieure(s) à la perméabilité surfacique de gaz de la portion médiane (74C).

12. Utilisation d'un dispositif de transfert (54) d'une feuille de substrat (32) selon les revendications 1 à 11, comprenant les étapes successives suivantes :
- entraîner le premier cylindre de transfert (70) à une vitesse de cylindre,
- déterminer la position réelle des premières ouvertures de passage (76),
- déterminer la position réelle des deuxièmes ouvertures de passage (86),
- modifier la position relative du tapis de transfert (74) par rapport au premier cylindre de transfert (70) en alignant les deuxièmes ouvertures de passage d'un gaz (86) avec les premières ouvertures de passage d'un gaz (76).

13. Utilisation selon la revendication 12, **caractérisée en ce que** la modification est une modification latérale et/ou circonférentielle.

## Patentansprüche

1. Transfervorrichtung (54) für ein Substratblatt (32), aufweisend:
- einen ersten Transferzylinder (70), der eine erste Achse (A-A), eine Umfangsrichtung und eine transversale Richtung definiert,
- ein Transferband (74), das sich um den ersten Transferzylinder (70) herum erstreckt,
wobei der erste Transferzylinder (70) erste Gasdurchgangsöffnungen (76) aufweist und das Transferband (74) zweite Gasdurchgangsöffnungen (86) aufweist, wobei das Transferband (74) und der erste Transferzylinder (70) eine Ausrichtungsposition definieren, welche bezogen auf den ersten Transferzylinder (70)eine relative Position des Transferbandes (74) ist, in welcher die zweiten Durchgangsöffnungen (86) mit den ersten Durchgangsöffnungen (76) ausgerichtet sind, **gekennzeichnet dadurch, dass** die Transfervorrichtung (54) Einstellmittel (90) für die Position des Transferbandes (74) bezogen auf den ersten Transferzylinder (70) aufweist, die eingerichtet sind, das Transferband (74) in Richtung der Ausrichtungsposition zu führen.

2. Transfervorrichtung (54) gemäß Anspruch 1, **gekennzeichnet dadurch, dass** die Transfervorrichtung (54) einen zweiten Transferzylinder (72) aufweist, der eine zweite Achse (B-B) definiert, und dadurch, dass das Transferband (74) sich um den zweiten Transferzylinder (72) herum erstreckt.

3. Transfervorrichtung (54) gemäß Anspruch 1 oder 2, **gekennzeichnet dadurch, dass** die Ausrichtungsposition eine umfängliche Ausrichtungsposition aufweist, und dadurch, dass die Einstellmittel (90) umfängliche Einstellmittel (92) aufweisen, die eingerichtet sind, das Transferband (74) in Richtung der umfänglichen Ausrichtungsposition zu führen.

4. Transfervorrichtung (54) gemäß Anspruch 3, **gekennzeichnet dadurch, dass** die umfänglichen Einstellmittel (92) umfängliche Bestimmungsmittel (94, 96, 98) aufweisen, die eingerichtet sind, bezogen auf die tatsächliche umfängliche Position des ersten Transferzylinders (70) die tatsächliche umfängliche Position des Transferbandes (74) zu bestimmen, und ausgehend von den umfänglichen Positionen ein Signal zu erzeugen, das bezogen auf die umfängliche Ausrichtungsposition eine umfängliche Verschiebung des Transferbandes (74) und des ersten Transferzylinders (70) anzeigt.

5. Transfervorrichtung (54) gemäß Anspruch 4, **gekennzeichnet dadurch, dass** die umfänglichen Bestimmungsmittel (94, 96, 98) einen Bandsensor (96) aufweisen, insbesondere eine Kamera, die eingerichtet ist, ein Bild von dem Transferband (74) aufzuzeichnen, und einen Erster-Transferzylinder-Sensor (94), insbesondere einen Encoder, der mit dem ersten Transferzylinder verbunden ist.

6. Transfervorrichtung (54) gemäß Anspruch 2 zusammen mit irgendeinem der Ansprüche 3 bis 5, **gekennzeichnet dadurch, dass** die umfänglichen Einstellmittel entweder Translationsverschiebungsmittel (100) des zweiten Transferzylinders (72) aufweisen, bezogen auf den ersten Transferzylinder (70), oder Einstellmittel (104, 114) für die relative umfängliche Geschwindigkeit zwischen dem ersten Transferzylinder und dem zweiten Transferzylinder.

7. Transfervorrichtung (54) gemäß irgendeinem der vorhergehenden Ansprüche, **gekennzeichnet dadurch, dass** die Ausrichtungsposition eine laterale Ausrichtungsposition aufweist, und dadurch, dass die Einstellmittel laterale Einstellmittel (120) aufweisen, die eingerichtet sind, das Transferband in Richtung der lateralen Ausrichtungsposition zu führen.

8. Transfervorrichtung (54) gemäß Anspruch 7, **gekennzeichnet dadurch, dass** die lateralen Einstellmittel (120) laterale Bestimmungsmittel (122) aufweisen, die eingerichtet sind, die tatsächliche laterale Position des Transferbandes (74) bezogen auf den ersten Transferzylinder (70)zu bestimmen, und ausgehend von der bestimmten lateralen Position ein Signal zu erzeugen, das eine laterale Verschiebung des Transferbandes (74) und des ersten Transferzylinders (70) bezogen auf die laterale Ausrichtungsposition anzeigt.

9. Transfervorrichtung (54) gemäß mindestens Ansprüchen 2 und 8 zusammen, **gekennzeichnet dadurch, dass** die lateralen Einstellmittel Winkelverschiebungsmittel des zweiten Transferzylinders (72) bezogen auf den ersten Transferzylinder (70) aufweisen.

10. Transfervorrichtung (54) gemäß irgendeinem der vorhergehenden Ansprüche, **gekennzeichnet dadurch, dass** es laterale Mittel zum Zentrieren des Transferbandes (74) bezogen auf den ersten Transferzylinder (70) aufweist, die Mittel zum Zentrieren insbesondere aufweisend eine gewölbte Oberfläche (132, 134) des oder jedes Transferzylinders (70, 72) oder laterale Flansche (136, 138) des oder jedes Transferzylinders (70, 72).

11. Transfervorrichtung (54) gemäß irgendeinem der vorhergehenden Ansprüche, **gekennzeichnet dadurch, dass** das Transferband (74) mindestens zwei längliche Blattbereiche (74A), vorzugsweise drei längliche Blattbereiche (74A), aufweist, von denen jeder aus einem Aufwärtsabschnitt (74B), einem mittleren Abschnitt (74C) und einem Abwärtsabschnitt (74D) aufgebaut ist,
dadurch, dass mindestens der Aufwärtsabschnitt (74B) und/oder der Abwärtsabschnitt (74D) mit zweiten Gasdurchgangsöffnungen versehen ist/sind, die eine Gasoberflächenpermeabilität des Aufwärts-/Abwärtsabschnittes definieren,
und dadurch, dass die Gasoberflächenpermeabilität des Aufwärtsabschnittes (74B) und/oder des Abwärtsabschnittes (74D) größer ist/sind als die Gasoberflächenpermeabilität des mittleren Abschnittes (74C).

12. Verwendung einer Transfervorrichtung (54) für ein Substratblatt (32) gemäß den Ansprüchen 1 bis 11, aufweisend die nachstehenden, aufeinanderfolgenden Schritte:
- Antreiben des ersten Transferzylinders (70) mit einer Zylindergeschwindigkeit,
- Bestimmen der tatsächlichen Position der ersten Durchgangsöffnungen (76),
- Bestimmen der tatsächlichen Position der zweiten Durchgangsöffnungen (86),
- Modifizieren der relativen Position des Transferbandes (74) bezogen auf den ersten Transferzylinder (70) durch Ausrichten der zweiten Gasdurchgangsöffnungen (86) mit den ersten Gasdurchgangsöffnungen (76).

13. Verwendung gemäß Anspruch 12, **gekennzeichnet dadurch, dass** die Modifizierung eine laterale Modifizierung und/oder eine Umfangsmodifizierung ist.

## Claims

1. A substrate sheet (32) transporting device (54), of the type including:
- a first transfer cylinder (70) defining a first axis (A-A), a circumferential direction and a transverse direction;
- a transfer belt (74) extending around the first transfer cylinder (70),
wherein the first transfer cylinder (70) includes first openings for the passage of a gas (76) and the transfer belt (74) comprises second openings for the passage of a gas (86), wherein the transfer belt (74) and the first transfer cylinder (70) define an alignment position that is a relative position of the transfer belt (74) in relation to the first transfer cylinder (70) in which the second passage openings (86) are aligned with the first passage openings (76), **characterized in that** the transfer device (54) includes means (90) for adjusting the position of the transfer belt (74) relative to the first transfer cylinder (70) adapted to bring the transfer belt (74) toward the alignment position.

2. The transfer device (54) according to claim 1, **characterized in that** the transfer device (54) includes a second transfer cylinder (72), defining a second axis (B-B), and **in that** the transfer belt (74) extends around said second transfer cylinder (72).

3. The transfer device (54) according to claim 1 or 2, **characterized in that** the alignment position comprises a circumferential alignment position, and the adjustment means (90) include circumferential adjustment means (92) adapted to bring the transfer belt (74) toward the circumferential alignment position.

4. The transfer device (54) according to claims 3, **characterized in that** the circumferential adjustment means (92) comprise circumferential determination means (94, 96, 98) adapted to determine the actual circumferential position of the transfer belt (74) relative to the actual circumferential position of the first transfer cylinder (70) and to generate, from these circumferential positions, a signal indicating a circumferential offset of the transfer belt (74) and the first transfer cylinder (70) relative to the circumferential alignment position.

5. The transfer device (54) according to claim 4, **characterized in that** the circumferential determination means (94, 96, 98) comprise a belt sensor (96), in particular a camera adapted to capture an image of the transfer belt (74), and a first transfer cylinder sensor (94), in particular an encoder connected to the first transfer cylinder,

6. The transfer device (54) according to claim 2 considered with any one of claims 3 to 5, **characterized in that** the circumferential adjustment means comprise either means (100) for shifting the second transfer cylinder (72) in translation relative to the first transfer cylinder (70), or means (104, 114) for adjusting the relative circumferential speed between the first transfer cylinder and the second transfer cylinder.

7. The transfer device (54) according to any one of the preceding claims, **characterized in that** the alignment position comprises a lateral alignment position, and **in that** the adjustment means comprise lateral adjustment means (120) adapted to bring the transfer belt toward the lateral alignment position.

8. The transfer device (54) according to claim 7, **characterized in that** the lateral adjustment means (120) comprise lateral determination means (122) adapted to determine the actual lateral position of the transfer belt (74) relative to the first transfer cylinder (70) and to generate, from said determined lateral position, a signal indicating a lateral offset of the transfer belt (74) and the first transfer cylinder (70) relative to the lateral alignment position.

9. The transfer device (54) according to at least claims 2 and 8 considered together, **characterized in that** the lateral adjustment means comprise angular offset means for the second transfer cylinder (72) relative to the first transfer cylinder (70).

10. The transfer device (54) according to any one of the preceding claims, **characterized in that** the transfer device comprises means for lateral centering of the transfer belt (74) relative to the first transfer cylinder (70), in particular these centering means comprise a curved surface (132, 134) of the or each transfer cylinder (70, 72) or lateral clips (136, 138) of the or each transfer cylinder (70, 72).

11. The transfer device (54) according to any one of the preceding claims, **characterized in that** the transfer belt (74) includes at least two longitudinal sheet areas (74A), preferably three longitudinal sheet areas (74A), each of which is made up of an upstream portion (74B), a middle portion (74C), and a downstream portion (74D),
**in that** at least the upstream portion (74B) and/or the downstream portion (74D) is/are provided with second gas passage openings (86) defining a gas surface permeability of the upstream/downstream portion,
and **in that** the gas surface permeability of the upstream portion (74B) and/or the downstream portion (74D) is/are greater than the gas surface permeability of the middle portion (74C).

12. A use of a device for transferring (54) a substrate sheet (32) according to claims 1 to 11, comprising the following successive steps:
- driving the first transfer cylinder (70) at a cylinder speed,
- determining the actual position of the first passage openings (76),
- determining the actual position of the second passage openings (86),
- modifying the relative position of the transfer belt (74) in relation to the first transfer cylinder (70) by aligning the second gas passage openings (86) with the first gas passage openings (76).

13. The use according to claim 12, **characterized in that** the modification is a lateral and/or circumferential modification.
